(19) Europäisches Patentamt
European Patent Office
Office européen des brevets

(11) Numéro de publication : **0 031 762**
**B1**

(12) **FASCICULE DE BREVET EUROPÉEN**

(45) Date de publication du fascicule du brevet :
28.11.84

(51) Int. Cl.³ : **H 04 L 27/02**

(21) Numéro de dépôt : 80401817.4

(22) Date de dépôt : 18.12.80

(54) **Modulateur-démodulateur pour transmission en double modulation d'amplitude à quatre niveaux sur porteuses en quadrature.**

(30) Priorité : 31.12.79 FR 7932166

(43) Date de publication de la demande :
08.07.81 Bulletin 81/27

(45) Mention de la délivrance du brevet :
28.11.84 Bulletin 84/48

(84) Etats contractants désignés :
DE GB IT

(56) Documents cités :
FR-A- 2 262 883
FR-A- 2 285 014
US-A- 3 204 029
1980 INTERNATIONAL ZÜRICH SEMINAR ON DIGI-
TAL COMMUNICATIONS DIGITAL TRANSMISSION
IN WIRELESS SYSTEMS, 4-6 mars 1980 ZÜRICH (CH)
J.C. BIC et al. "4-bit Oqask A new 16-ary APK
system", pages A4-1 - A4-6
L'ONDE ELECTRIQUE, volume 58, no. 1, janvier 1978
PARIS (FR) V. MAUREL "Exemples de transcodage
adapté à la transmission numérique" pages 50-55

(73) Titulaire : **Bic, Jean-Claude**
**10 bis, rue des 3 Yvonne**
**F-94100 St Maur (FR)**

**Brossard, Pierre, Claude**
**9, rue des Fleurs**
**F-78190 Montigny-le-Bretonneux (FR)**

**Dupontell, Daniel**
**55, Rue Sadi Carnot**
**F-92170 Vanves (FR)**

(72) Inventeur : **Bic, Jean-Claude**
**10 bis, rue des 3 Yvonne**
**F-94100 St Maur (FR)**
Inventeur : **Brossard, Pierre, Claude**
**9, rue des Fleurs**
**F-78190 Montigny-le-Bretonneux (FR)**
Inventeur : **Dupontell, Daniel**
**55, Rue Sadit Carnot**
**F-92170 Vanves (FR)**

(74) Mandataire : **Le Guen, Louis François**
**13, rue Emile Bara BP 91**
**F-35802 Dinard Cedex (FR)**

Jouve, 18, rue St-Denis, 75001 Paris, France

# 0 031 762

**Description**

La présente invention concerne un modulateur-démodulateur pour transmission en double modulation d'amplitude à quatre niveaux sur porteuses en quadrature.

Actuellement les modulations numériques les plus utilisées sont la modulation par déplacement de phase à deux états, dite modulation MDP2, et la modulation par déplacement de phase à quatre états, dite modulation MDP4. Cette dernière modulation permet une division par deux de la bande de fréquence nécessaire par rapport à la modulation MDP2.

Depuis quelques années, un effort certain est fait pour utiliser des modulations à nombre d'états plus élevés et, en particulier, des modulations à seize états qui permettent une division par deux de la bande de fréquence nécessaire par rapport à la modulation MDP4.

Parmi les modulations à seize états, qui ont fait l'objet d'études théoriques et pratiques, la modulation par déplacement d'amplitude sur porteuses en quadrature à seize états, dite modulation MDAQ16, a retenu l'attention parce qu'elle est parmi les plus simples de réalisation, tout en ayant de bonnes performances. En fait, la modulation MDAQ16 peut être considérée comme simple à mettre en œuvre en ce qui concerne l'aspect modulation.

On rappelle qu'une modulation MDAQ est une double modulation numérique d'amplitude de deux porteuses en quadrature. Un signal MDAQ peut s'écrire comme suit :

$$s(t) = a_1(t) \cos (2\pi f_0 t + \varphi_0 - a_2(t) \sin (2\pi f_0 t + \varphi_0)$$

où

$$a_1(t) = \sum_i a_{2j} R_{2\Delta}(t - 2i\Delta)$$

$$a_2(t) = \sum_i a_{2i+1} R_{2\Delta}(t - 2i\Delta)$$

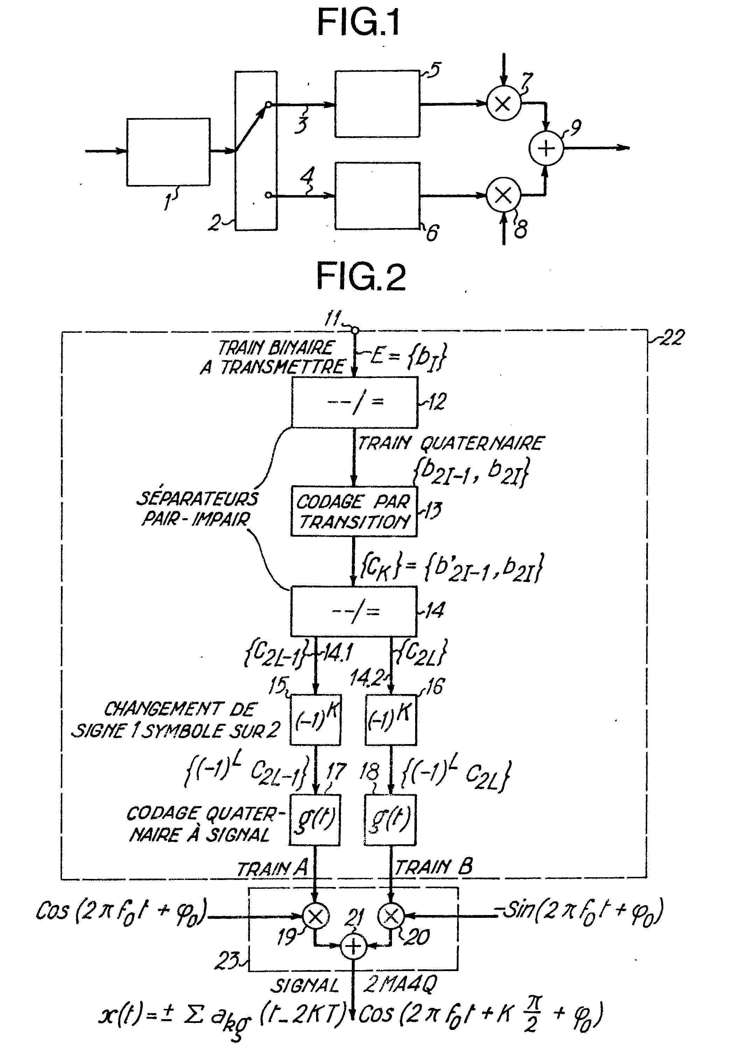

La suite des $a_i$ est obtenue par transformation dans un codeur à partir de la suite des symboles binaires $\{d_k\}$ à transmettre, les symboles $a_i$ représentant les q niveaux du codage. On suppose que les $a_i$ sont décorrélés, donc que $a_1(t)$ et $a_2(t)$ le sont aussi et ont même spectre. Un modulateur connu pour modulation MDAQ est montré à la Fig. 1. Il comprend un codeur 1 à l'entrée duquel est appliqué la suite des éléments binaires à transmettre et dont la sortie délivre la suite des $a_i$. La sortie du codeur 1 est reliée à un circuit séparateur pair-impair (symbolisé par un contact inverseur) 2 dont une sortie 3 est reliée à l'entrée d'un premier codeur binaire à signal 5 et une sortie 4 reliée à l'entrée d'un codeur binaire à signal 6. Le commutateur 2 oriente alternativement les signaux qui lui sont appliqués vers la sortie 3 et vers sa sortie 4. Ainsi, on a à la sortie 3 les signaux $a_{2i+1}$ et à la sortie 4 les signaux $a_{2i}$. A la sortie du codeur binaire à signal 5, on a le signal $a_2(t)$ et à la sortie du codeur binaire à signal 6 le signal $a_1(t)$. La sortie de 5 est reliée à une entrée d'un multiplicateur 7 dont l'autre entrée reçoit le signal $-A \sin (2\pi f_0 t + \varphi_0)$. La sortie de 6 est reliée à une entrée d'un multiplicateur 8 dont la seconde entrée reçoit le signal $A \cos (2\pi f_0 t + \varphi_0)$. Les sorties des multiplicateurs 7 et 8 sont respectivement reliées aux entrées d'un additionneur 9 dont la sortie délivre le signal s(t). Il apparaît que ce modulateur est relativement simple, voir aussi le brevet FR-A-2 262 883.

Malheureusement, il existe une grosse difficulté en ce qui concerne l'aspect démodulation et, plus particulièrement, en ce qui concerne la récupération de la porteuse. La démodulation doit être une démodulation cohérente, c'est-à-dire qu'elle doit utiliser une référence, appelée, porteuse récupérée, extraite du signal reçu et qui doit être aussi proche que possible de la porteuse utilisée pour la transmission. Il se trouve que la porteuse récupérée présente habituellement plusieurs déterminations de phase possibles. C'est ce qu'on appelle le phénomène d'ambiguïté de phase. En modulation MDAQ 16, les ambiguïtés sont d'un ordre élevé qui sont impossibles à lever par les modalités de codage-décodage que l'on utilise en modulation MDPn. Il subsiste des phases parasites qu'il faut éliminer par des méthodes de test sur le signal démodulé, ce qui conduit à des démodulateurs qui sont très complexes et, en particulier, beaucoup plus complexes qu'un démodulateur MPD4.

On rappelle qu'avec les modulations MDPn, la phase de la porteuse récupérée dans le démodulateur est connue à $2\pi/n$ près. Toutefois le problème de l'ambiguïté de la phase peut être résolu d'une manière simple. En effet, il suffit de procéder à un codage par transition du message numérique à transmettre, puis à la réception, de procéder à un décodage par transition, au prix d'un doublement du taux d'erreur sur les éléments binaires.

Un objet de la présente invention consiste à prévoir une modulation avec laquelle le signal modulé a seize états et des caractéristiques spectrales et de filtrage, ainsi que des performances, qui sont en tous points identiques à celles d'un signal modulé en modulation MDAQ16, le modulateur à mettre en œuvre étant d'une complexité plutôt moindre que celle d'un modulateur MDAQ16, et le démodulateur étant d'une grande simplicité de réalisation.

Les caractéristiques de l'invention mentionnées ci-dessus, ainsi que d'autres apparaîtront plus clairement à la lecture de la decription suivante d'un exemple de réalisation, ladite description étant faite en relation avec les dessins joints, parmi lesquels :

2

la Figure 1, déjà décrite, est un schéma simplifié d'un modulateur connu pour modulation MDAQ,

la Figure 2 est un schéma-bloc simplifié d'un modulateur suivant l'invention, pour modulation 2MA4Q,

la Figure 3 est un bloc-diagrammme simplifié d'un codeur utilisable dans le modulateur de la Fig. 2,

la Figure 4 est le schéma détaillé d'un codeur conforme au codeur de la Fig. 3,

la Figure 5 est le schéma détaillé de la partie modulation d'un modulateur, suivant l'invention, utilisable avec le codeur de la Fig. 4.

les Figures 6a à 6t sont des diagrammmes temporels utiles pour illustrer les fonctionnements des circuits des Figs. 4 et 5, et

la Figure 7 est un schéma-bloc d'un démodulateur suivant l'invention.

Avec la modulation 2MA4Q, suivant l'invention, la porteuse modulée est, comme en modulation MDAQ, obtenue par addition de deux porteuses en quadrature, modulée en amplitude par deux trains numériques en bande de base à quatre niveaux possibles, mais les horloges des trains numériques sont déphasées de $\pi$, c'est à dire sont de signes opposés.

Ainsi, si le modulateur reçoit un train numérique de débit $1/T$, le signal modulé en 2MA4Q peut s'écrire :

$$x(t) = \sum_{L} (-1)^L a_{2L} g(t - 4\,LT) \cos (2\,\pi f_0 t + \varphi_0)$$

$$- \sum_{L} (-1)^L a_{2L+1} g(t - 4\,LT - 2\,T) \sin (2\,\pi f_0 t + \varphi_0) \tag{1}$$

ou encore sous la forme :

$$x(t) = \sum_{k} a_k g(t - 2\,kT) \cos \left( 2\,\pi f_0 t + k\frac{\pi}{2} + \varphi_0 \right) \tag{2}$$

La formule (1) fait apparaître l'expression des deux trains modulant.

Pour démoduler le signal de la formule (2), on utilise un signal de référence $y(t)$, tel que :

$$y(t) = B \cos \left[ 2\,\pi \left( f_0 + \frac{1}{8\,T} \right) t + \varphi_0 \right]. \tag{3}$$

En multipliant le signal $x(t)$ par la référence $y(t)$, puis en ne concervant que le terme basse fréquence, on obtient, pour le signal démodulé, l'expression suivante :

$$z(t) = \sum_{k} a_k g(t - 2\,kt) \cos \frac{\pi}{4\,T} (t - 2\,kT). \tag{4}$$

Un échantillonnage du signal $z(t)$ au rythme $1/2\,T$, c'est à dire toutes les $2\,T$ secondes, permet de récupérer les symboles $a_k$ et, par conséquent, le train numérique binaire, aux erreurs de transmission près.

Le raisonnement ci-dessus a été conduit sans tenir compte du filtrage par le canal de transmission du signal modulé en 2MA4Q, mais serait exactement le même en tenant compte de ce filtrage de transmission.

A la démodulation, un circuit de récupération de la porteuse fournit le signal $y(t)$, avec une simple ambiguïté de signe. La suite des $a_k$ est donc récupérée au signe près. En conséquence, on utilisera avant la modulation proprement dite, un codage par transition et, après la démodulation, une décodage par transition.

Il faut encore noter que, le signal modulé est pris sous la forme :

$$x^*(t) = \sum_{k} a_k g(t - 2\,kT) \cos \left( 2\,\pi f_0 t - k\frac{\pi}{2} + \varphi_0 \right) \tag{5}$$

la démodulation se fait en utilisant la référence $y^*(t)$, telle que :

$$y^*(t) = \cos \left[ 2\,\pi \left( f_0 - \frac{1}{8\,T} \right) t + \varphi_0 \right] \tag{6}$$

qui est également fournie par le circuit de récupération de la porteuse.

Le schéma de la Fig. 2 permet d'illustrer le fonctionnement d'un modulateur capable de délivrer un signal à modulation 2MA4Q suivant l'invention.

L'entrée 11 qui reçoit un train binaire $E=\{b_i\}$ à transmettre est reliée à l'entrée d'un circuit séparateur pair-impair 12 qui délivre un train quaternaire $\{b_{2l-1}, b_{2l}\}$. La sortie du circuit 12 est reliée à l'entrée d'un circuit de codage par transition 13 qui code par transition les éléments binaires du train impair du train quaternaire appliqué par 12. Donc, le circuit 13 délivre le train quaternaire suivant :

$$\{c'_k\}=\{b'_{2l-1}, b_{2l}\}.$$

La sortie du circuit de codage 13 est reliée à un circuit séparateur pair-impair 14 qui délivre, sur sa sortie 14.1, le train impair $\{C_{2L-1}\}$ et, sur sa sortie 14.2, le train pair $\{C_{2L}\}$. La sortie 14.1 est reliée à l'entrée d'un circuit 15 changeant le signe d'un symbole entrant sur deux et qui délivre donc le train $\{(-1)^L C_{2L-1}\}$. La sortie 14.2 est reliée à l'entrée d'un circuit 16 qui fonctionne comme le circuit 15 et qui délivre le train $\{(-1)^L C_{2L}\}$. La sortie du circuit 15 est reliée à l'entrée d'un circuit de codage quaternaire à signal 17 tandis que la sortie du circuit 16 est reliée à l'entrée d'un circuit de codage quaternaire à signal 18. Le circuit 17 est relié à une entrée d'un multiplicateur 19 dont la seconde entrée reçoit le signal de porteuse $\cos (2\pi f_0 t + \varphi_o)$. La sortie du circuit 18 est reliée à une entrée d'un multiplicateur 20 dont la seconde entrée reçoit le signal $-\sin (2\pi f_0 t + \varphi_o)$. Les sorties des multiplicateurs 19 et 20 sont respectivement reliées aux entrées d'un additionneur 21 qui délivre le signal s(t) correspondant à la formule (1).

Dans le schéma de la Fig. 2, on peut distinguer un premier ensemble ou codeur 22 dans lequel sont inclus les éléments 12 à 18, et un second ensemble ou partie modulation proprement dite 23 dans lequel sont inclus les éléments 19 à 21.

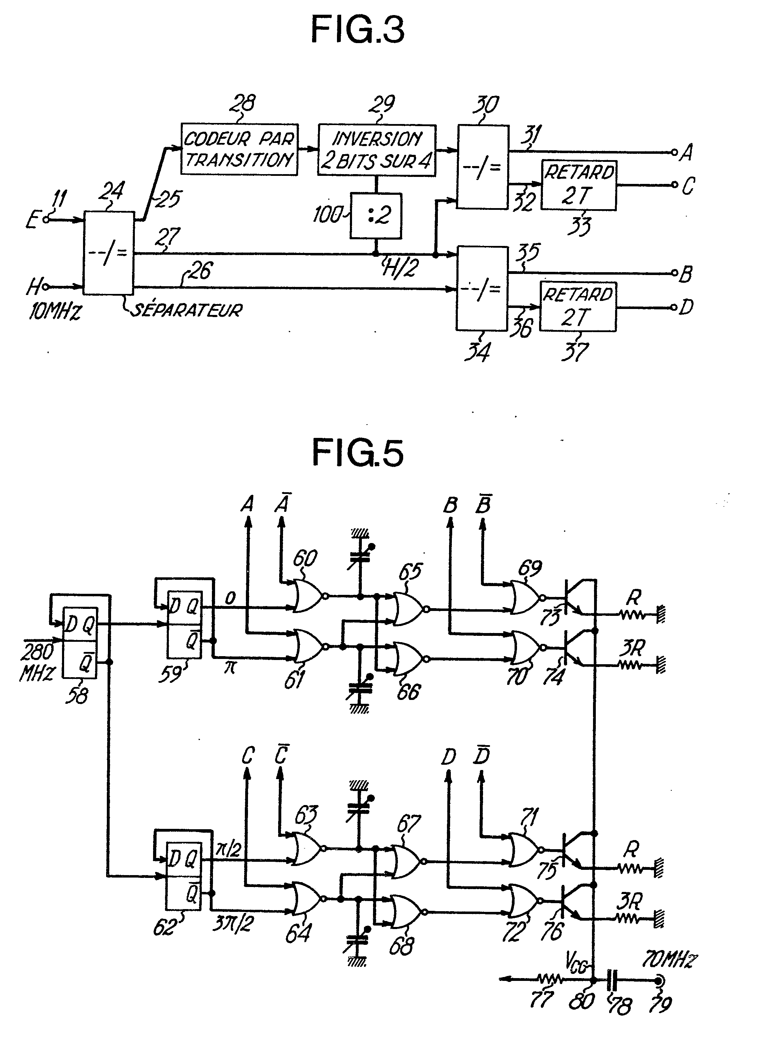

Un bloc-diagramme du codeur 22, correspondant à un exemple de réalisation possible alors que le schéma bloc de la Fig. 2 correspond surtout à un ensemble fonctionnel, est montré à la Fig. 3.

A l'entrée 11, est appliqué le train binaire E tandis qu'à l'entrée F est appliqué le signal d'horloge H. Le circuit séparateur pair-impair 24 reçoit le train binaire E et l'horloge II et délivre sur sa sortie 25 le train impair, sur sa sortie 26 le train pair et sur sa sortie 27 un signal d'horloge de fréquence moitié H/2. La sortie 25 est reliée à l'entrée d'un codeur par transition 28 dont la sortie est reliée à l'entrée de signal d'un circuit 29 effectuant l'inversion de deux éléments binaires sur quatre. La sortie 27 est encore reliée à l'entrée d'horloge du circuit 29 par un diviseur de fréquence par deux 100. La sortie du circuit 29 est reliée à l'entrée de signal d'un circuit séparateur pair-impair 30 dont l'entrée d'horloge reçoit le signal H/2. Le circuit 30 délivre sur sa sortie 31 le train impair A et sa sortie 32 le train pair qui est appliqué à un circuit à retard 33 qui délivre le train C. La sortie 26 est reliée à l'entrée de signal d'un circuit séparateur pair-impair 34 dont l'entrée d'horloge reçoit le signal H/2. Le circuit 34 délivre sur sa sortie 35 le train impair B et sa sortie 36 le train pair qui est appliqué à un circuit à retard 37 qui délivre le train D. Les retards des circuits 33 et 37 sont égaux à 2T, ou T est la période d'un élément binaire.

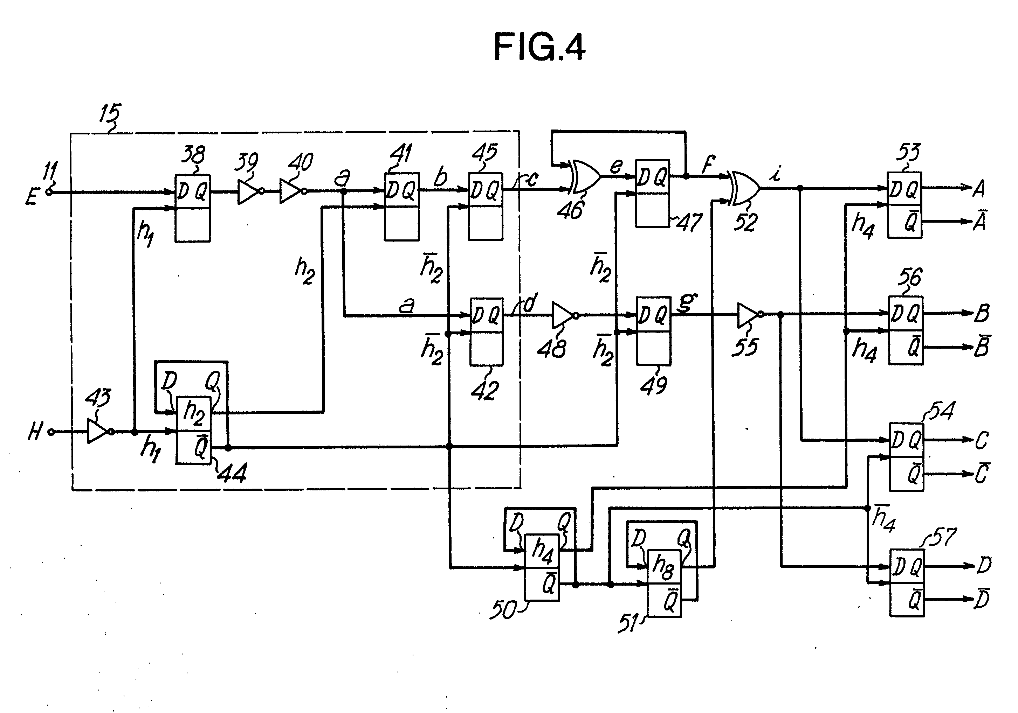

La Fig. 4 représente un schéma détaillé du codeur de la Fig. 3. L'entrée 11 est reliée à l'entrée D d'une bascule D38 dont la sortie Q est reliée à l'entrée d'un inverseur 39 dont la sortie est reliée à l'entrée d'un inverseur 40 dont la sortie est reliée d'une part à l'entrée D d'une bascule D41 et, d'autre part, à l'entrée D d'une bascule D42. L'entrée d'horloge de la bascule 38 est reliée à la sortie d'un inverseur 43 à l'entrée duquel est appliqué le signal d'horloge H. La sortie de l'inverseur 43 est encore reliée à l'entrée d'horloge d'une bascule D44 dont la sortie $\bar{Q}$ est reliée à son entrée D et dont la sortie Q est reliée à l'entrée d'horloge de la bascule 41. La sortie $\bar{Q}$ de la bascule 44 est également reliée en parallèle aux entrée d'horloge de la bascule 42 et d'une bascule D45.

La sortie Q de la bascule 45 est reliée à une entrée d'une porte OU exclusive 46 dont la sortie est reliée à l'entrée D d'une bascule D47. La bascule 47 a sa sortie Q reliée à la seconde entrée de la porte OU exclusive 46 et son entrée d'horloge reliée à la sortie $\bar{Q}$ de la bascule 44. La sortie Q de la bascule 42 est reliée par un inverseur 48 à l'entrée D d'une bascule D49 dont l'entrée d'horloge est également reliée à la sortie $\bar{Q}$ de la bascule 44. La sortie $\bar{Q}$ de la bascule 44 est encore reliée à l'entrée d'horloge d'une bascule D50 dont la sortie $\bar{Q}$ est reliée, d'une part à son entrée D et, d'autre part, à l'entrée d'horloge d'une bascule D51 dont la sortie $\bar{Q}$ est également reliée à l'entrée D de 51. Les sorties Q des bascules 47 et 51 sont respectivement reliées aux deux entrées d'une porte OU exclusif 52 dont la sortie est reliée, d'une part, à l'entrée D d'une bascule D53 et, d'autre part, à l'entrée D d'une bascule D54. La sortie Q de la bascule 49 est reliée par un inverseur 55, d'une part à l'entrée D d'une bascule D56 et d'autre part, à l'entrée D d'une bascule D57. Les entrées d'horloge des bascules 53 et 56 sont reliées à la sortie Q de la bascule 50 tandis que les entrées d'horloge des bascules 54 et 57 sont reliées à la sortie $\bar{Q}$ de 50.

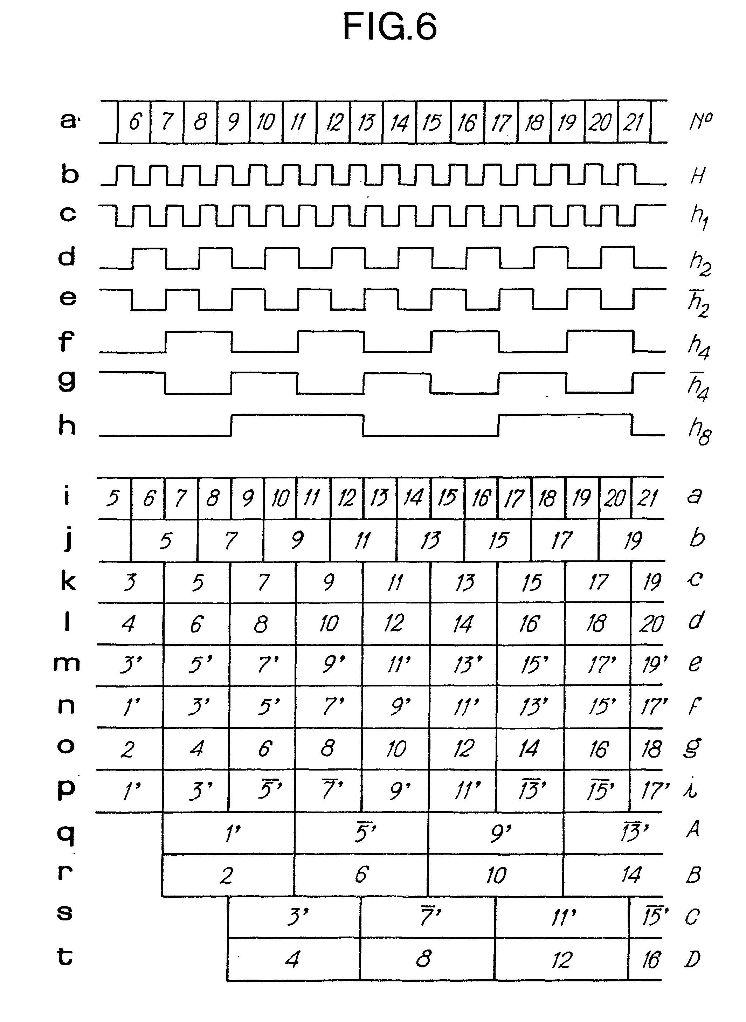

La Fig. 5 représente un schéma détaillé de la partie modulation d'un modulateur destiné suivant l'invention à être couplé à la sortie du codeur de la Fig. 4. Une bascule D58 a son entrée d'horloge à laquelle est appliqué le signal à fréquence porteuse de 280 MHz, sa sortie $\bar{Q}$ reliée à son entrée D et sa sortie Q reliée à l'entrée d'horloge d'une bascule D59. La sortie Q de la bascule 59 est reliée à une entrée d'une porte NON-OU 60 dont la seconde entrée est reliée à la sortie $\bar{Q}$ de la bascule 53. La sortie $\bar{Q}$ de la bascule 59 est reliée, d'une part, à l'entrée D de 59 et, d'autre part, à une entrée d'une porte NON-OU 61 dont la seconde entrée est reliée à la sortie Q de la bascule 53. La sortie $\bar{Q}$ de la bascule 58 est encore reliée à l'entrée d'horloge d'une bascule D62. La sortie Q de la bascule 62 est reliée à une entrée d'une porte NON-OU 63 dont l'autre entrée est reliée à la sortie $\bar{Q}$ de la bascule 54. la sortie $\bar{Q}$ de la bascule 62 est reliée, d'une part, à l'entrée D de 62, d'autre part, à une entrée d'une porte NON-OU 64 dont l'autre entrée est reliée à la sortie Q de la bascule 54.

La sortie de la porte 60 est respectivement reliée aux premières entrées de deux portes NON-OU 65 et 66 tandis que la sortie de la porte 61 est respectivement reliée aux secondes entrées des portes 65 et 66. La sortie de la porte 63 est respectivement reliée aux premières entrées de deux portes NON-OU 67 et 68 tandis que la sortie de la porte 64 est respectivement reliée aux secondes entrées des portes 67 et 68. La sortie de la porte 65 est reliée à une entrée d'une porte NON-OU 69 dont la seconde entrée est reliée à la sortie $\bar{Q}$ de la bascule 56. La sortie de la porte 66 est reliée à une entrée d'une porte NON-OU 70 dont l'autre entrée est reliée à la sortie Q de la bascule 56. La sortie de la porte 67 est reliée à une entrée d'une porte NON-OU 71 dont l'autre entrée est reliée à la sortie $\bar{Q}$ de la bascule 57. La sortie de la porte 68 est reliée à une entrée d'une porte NON-OU 72 dont l'autre entrée est reliée à la sortie Q de la bascule 57.

Les sorties des portes NON-OU 69 à 72 sont respectivement reliées aux bases de quatre transistors NPN 73 à 76 dont les collecteurs sont reliés en parallèle à une ligne d'alimentation commune $v_{cc}$, par une résistance 77. Les émetteurs des transistors 73 et 75 sont respectivement reliés à la masse par des résistances de valeurs R tandis que les émetteurs des transistors 74 et 76 sont respectivement reliés à la masse par des résistances de valeurs 3R. Le point commun 80 aux collecteurs des transistors et à la résistance 77 est relié par un condensateur 78 à une ligne de sortie 79, qui délivre le signal modulé de fréquence porteuse 70 MHz.

On a représenté à la Fig. 6a la suite chronologique des éléments binaires 6 à 21 du train E appliqué à l'entrée 11 du codeur et, à la Fig. 6b, le signal d'horloge H appliqué à l'entrée de l'inverseur 43. La Fig. 6c représente le signal h1 (h1 = $\bar{H}$) délivré à la sortie de l'inverseur 43.

La bascule 44 est montée en diviseur par deux dont la sortie Q délivre le signal h2, représenté à la Fig. 6d, et dont la sortie $\bar{Q}$ délivre le signal $\bar{h}2$, représenté à la Fig. 6e.

La bascule 50 est également montée en diviseur par deux dont la sortie Q délivre le signal h4, représenté à la Fig. 6f, et dont la sortie $\bar{Q}$ délivre le signal $\bar{h}4$, représenté à la Fig. 6g.

La bascule 51 est également montée en diviseur par deux dont la sortie Q délivre le signal h8, représenté à la Fig. 6h.

Les inverseurs 39 et 40 ont uniquement pour effet de retarder le signal délivré par la sortie Q de la bascule 38 afin d'assurer une lecture de ce signal par l'horloge obtenue sur la sortie Q de la bascule 44.

La Fig. 6i représente le signal a délivré par la sortie Q de la bascule 38, avant qu'il soit retardé par 39 et 40. Le signal a est donc le signal E lu par le signal h1. En conséquence, la Fig. 6i indique la suite des éléments binaires de la Fig. 6a, mais retardé de T/2, si T est la période du signal d'horloge H.

La Fig. 6j représente le signal b délivré à la sortie de la bascule 41. Le signal b est le signal a lu par le signal h2. Comme le signal h2 a une période double de celle du signal h1, le signal b ne comporte que les éléments binaires de rang impair du signal a.

La Fig. 6k représente le signal c délivré par la sortie Q de la bascule 45. Le signal c est le signal b lu par le signal $\bar{h}2$. Par conséquent, le signal c correspond au signal b mais retardé de T.

La Fig. 6l représente le signal d délivré par la sortie Q de la bascule 42. Le signal d est le signal a lu par le signal $\bar{h}2$. Par conséquent, comme le signal $\bar{h}2$ a une période double de celle du signal h1, le signal d ne comporte que les éléments binaires de rang pair du signal a. Par ailleurs, le signal d est synchrone avec le signal c. L'ensemble des signaux c et d forme le train quaternaire.

La Fig. 6m représente le signal e délivré par la porte 46. Le signal e correspond au signal c codé par transition. A la Fig. 6m, les éléments binaires codés par transition sont repérés par les mêmes références numériques qu'à la Fig. 6k, mais qui sont accentuées.

La Fig. 6n représente le signal f délivré à la sortie Q de la bascule 47. Le signal f est le signal e lu par le signal $\bar{h}2$. Donc, le signal f correspond au signal e retardé de 2T.

L'inverseur 48 retarde le signal d pour compenser le retard du signal c dans la porte 46. La Fig. 6o représente le signal g délivré à la sortie Q de la bascule 49. Le signal g est le signal d retardé, lu par le signal $\bar{h}2$. Donc, le signal g correspond au signal d retardé de 2T. L'ensemble des signaux f et g constitue le train quaternaire, une fois le codage par transition effectué sur les éléments impairs.

La Fig. 6p représente le signal i délivré par la sortie de la porte OU 52. Comme la porte OU 52 reçoit sur une entrée le signal montré à la Fig. 6h, la porte 52 change le signe des éléments binaires du signal f tous les deux symboles, la durée de deux symboles étant égale à 4T.

La porte 55 a uniquement pour objet de retarder le signal g de manière à compenser le retard du traitement dans la porte 52. Donc, on retrouve à la sortie de 55 le signal g légèrement retardé.

La Fig. 6q représente le signal A délivré par la sortie Q de la bascule 53. Le signal A est le signal i lu par le signal h4. Comme le signal h4 a une période double de celle du signal h2, le signal A ne comporte que les symboles de rangs pairs du signal i.

La Fig. 6r représente le signal B délivré par la sortie Q de la bascule 56. Le signal B est le signal g lu par le signal h4 comme le signal h4 a une période double de celle du signal h2, le signal B ne comporte que les symboles de rangs pairs du signal g.

La Fig. 6s représente le signal C délivré par la sortie Q de la bascule 54. Le signal C est le signal i lu par le signal $\bar{h}4$. Comme le signal h4 a une période double de celle du signal h2, le signal C ne comporte que les symboles de rangs impairs du signal i.

La Fig. 6t représente le signal D délivré par la sortie q de la bascule 57. Le signal D est le signal g lu par le signal $\bar{h}4$. Comme le signal h4 a une période double de celle su signal h2, le signal D ne comporte que les symboles de rangs impairs du signal g.

Il apparaît que l'ensemble des bascules 41, 42, et 45 forment avec la bascule 44, le séparateur pair-impair 12 de la Fig. 2, que l'ensemble de la porte 46 et de la bascule 47 forme, avec la bascule 49, le codeur par transition 13, que la porte 52, avec la bascule 51, effectue le traitement de changement de signe des circuits 15 et 16, et que l'ensemble des bascules 53, 54, 56 et 57 forme, avec la bascule 50, un séparateur pair-impair effectuant la séparation prévue dans le circuit 14 de la Fig. 2.

Le tableau suivant définit le codage symbole quaternaire/signal utilisé dans l'exemple de réalisation décrit, c'est-à-dire la correspondance entre les symboles quaternaires et les niveaux d'amplitude du signal modulant.

### Tableau

### Codage quaternaire à niveau

| Symbole | Niveau |
|---------|--------|
| 11 | $3U$ |
| 10 | $U$ |
| 00 | $-U$ |
| 01 | $-3U$ |

Les symboles quaternaires formés par les couples (1', 2), ($\bar{5}'$, 6), (9', 10); etc. des Figs. 6q et 6r provoquent par la complémentation de l'élément binaire de rang impair, un couple sur deux, un changement de signe du niveau correspondant, comme le montre la consultation du tableau ci-dessus. Il en est de même pour les symboles formés par les couples des Figs. 6s et 6t.

Enfin, le décalage des horloges appliquées respectivement aux bascules 53 et 56, d'une part, et aux bascules 54 et 57, d'autre part, provoque le déphasage entre les signaux modulants les porteuses en quadrature.

Dans la partie modulation de la Fig. 5, la bascule 58 fonctionne en diviseur par deux de fréquence. Ses sorties Q et $\bar{Q}$ délivrent des signaux à 140 MHz déphasés de $\pi$. De même, les bascules 59 et 62 fonctionnent chacune en diviseur par deux de fréquence et délivrent donc des signaux à 70 MHz. Le signal d'horloge de la bascule 59 étant supposé appliqué avec une phase nulle, en ce qui concerne les fronts montants, la sortie Q de 59 délivre un signal de phase tandis que la sortie $\bar{Q}$ de 59 délivre un signal déphasé de $\pi$. Le signal d'horloge de la bascule 62 est appliqué avec un déphasage de $\pi$, en ce qui concerne les fronts montants; donc la sortie Q de 62 délivre un signal déphasé de $\pi/2$ par rapport à la sortie Q de 59 et la sortie $\bar{Q}$ délivre un signal déphasé de 3 $\pi$2 toujours par rapport à la sortie Q de 59.

L'ensemble des portes 60, 61, 65, 66, 69 et 70 constitue un multiplicateur, tel que 19, qui effectue la multiplication de A par la porteuse sous la forme d'un choix de phase et d'un choix d'amplitude. La porte 60 reçoit les mêmes signaux que la porte 65 et délivre les mêmes signaux. Les portes 69 et 70 combinent respectivement les signaux délivrés par 65 et 66 avec les signaux B et $\bar{B}$ qui décident de l'amplitude U ou 3U.

En fonction de l'état 1 ou 0 du signal de commande B, le signal à 70 MHz, de phase 0 ou $\pi$ déterminée par les signaux de commande A et $\bar{A}$ par l'intermédiaire des portes 60 et 61, se présente à l'entrée du transistor 73 ou du transistor 74 et se retrouve en sortie affecté d'une amplitude 3U (transistor 73) ou d'une amplitude U (transistor 74).

Les transistors 75 et 76, associés aux portes 63, 64, 67, 68 75 et 76, remplissent le même rôle sur la composante en quadrature et délivrent un signal qui vient s'ajouter à celui qui est délivré par les transistors 73 et 74. Comme la capacité 78 ne conduit pas le courant continu, elle élimine les tensions continues délivrées par les deux transistors sur les quatre qui ont leurs entrées maintenues à un niveau constant par les deux signaux de commande sur les quatre possibles B, $\bar{B}$, D et $\bar{D}$, qui sont à l'état 1.

Comme les signaux délivrés par la bascule 62 sont en quadrature avec ceux délivrés par la bascule 59, les additions des effets des états sur les paires de portes 69-70 et 71-72 sont conformes à la formule (1). La ligne 79 transmet donc bien le signal 2MA4Q.

A noter que les portes 69 à 72 constituent, avec les transistors 73 à 76, un convertisseur numérique-analogique d'un type qui est décrit dans la demande de brevet français 7 909 880 du 19 avril 1979.

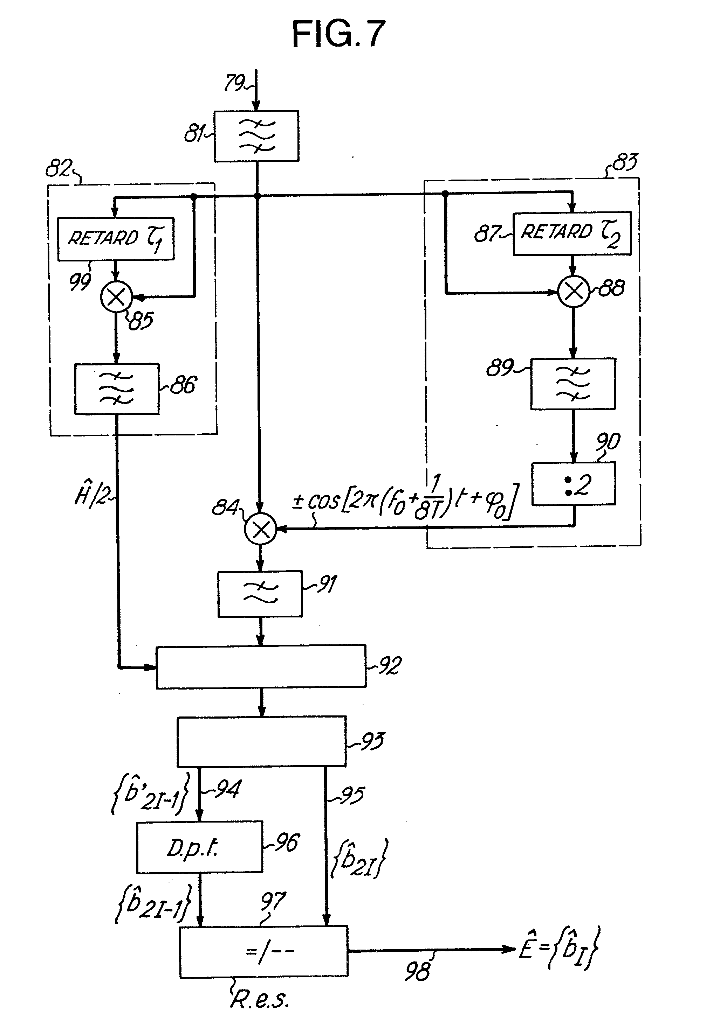

La Fig. 7 représente le schéma d'un démodulateur capable de démoduler le signal à modulation 2MA4Q.

La ligne 79 est reliée à l'entrée d'un filtre 81 dont la sortie est reliée, d'une part, à l'entrée d'un circuit de récupération d'horloge 82, d'autre part, à l'entrée d'un circuit de récupération de porteuse 83 et, enfin à une entrée d'un multiplicateur 84.

Le circuit de récupération d'horloge 82 a son entrée reliée, d'une part, à l'entrée d'un circuit à retard 99 dont la sortie est, reliée à une entrée d'un multiplicateur 85 et, d'autre part, à l'autre entrée du multiplicateur 85. La sortie du multiplicateur 85 est reliée à l'entrée d'un filtre 86 à bande étroite. Le retard $\tau 1$ apporté par le circuit 99 est réglé de manière à obtenir la meilleure référence horloge possible. La multiplication du signal reçu dans 82 par lui-même retardé pour faire apparaître une raie à la fréquence horloge H/2, puis le filtrage de cette raie dans le filtre 86 pour éliminer un maximum de bruit sont

6

classiques. De préférence, le filtre 86 est une boucle à verrouillage de phase. La sortie du filtre 86 délivre le signal d'horloge récupéré $\hat{H}/2$.

Le circuit de récupération de porteuse 83 a son entrée reliée, d'une part, à l'entrée d'un circuit à retard 87 dont la sortie est reliée à une entrée d'un multiplicateur 88 et, d'autre part, à l'autre entrée du multiplicateur 88. La sortie du multiplicateur 88 est reliée à l'entrée d'un filtre 89 à bande étroite centrée sur $(2\,f_0+1/4T)$. Le retard $\tau2$ apporté par le circuit 87 est réglé de manière à obtenir la meilleure référence fréquence porteuse. En effet, l'ensemble du circuit à retard 87 et du multiplicateur 88, du même type que le circuit classique de récupération d'horloge permet d'obtenir un signal présentant des raies (fréquences pures) aux fréquences $(2\,f_0+1/4T)$, c'est-à-dire aux fréquences doubles des fréquences nécessaires à la démodulation simplifiée préconisée suivant la formule (6). L'ajustage du retard $\tau2$ peut conduire à une valeur différente de celle de $\tau1$. C'est la raison pour laquelle on a prévu des circuits de récupération d'horloge et de porteuse séparés. Le filtre 89 est de préférence une boucle à verrouillage de phase. La sortie du filtre 89 est reliée à un diviseur par deux 90 qui délivre le signal $+ y(t)$. Il apparaît donc que l'on obtient la référence de la porteuse avec une ambiguïté de phase de $\pi$. La sortie du diviseur 90 est reliée à l'autre entrée du multiplicateur 84.

La sortie du multiplicateur 84 est reliée à l'entrée d'un filtre passe-bas 91 dont la sortie est reliée à l'entrée de signal d'un échantillonneur 92 dont l'entrée d'horloge est reliée à la sortie du circuit 82. La sortie de l'échantillonneur 92 est reliée à un convertisseur analogique 93 à trois seuils 2 U, O et − 2 U qui délivre des mots quaternaires de deux éléments binaires. la sortie 94 du convertisseur 93 délivre l'élément binaire de poids fort du mot quaternaire tandis que la sortie 95 délivre l'élément binaire de poids faible. La sortie 94 est reliée à l'entrée d'un circuit décodeur par transition 96 qui effectue une addition modulo 2 sur l'élément binaire de poids fort courant $\hat{b}'_{2l-1}$ de l'élement binaire précédent $\hat{b}'_{2l-3}$ pour délivrer l'élément binaire décodé $\hat{b}_{2l-1}$.

La sortie du décodeur 96 et la sortie 95 de 93 délivrant l'élément binaire $\hat{b}_{2l}$ sont reliées aux entrées d'un circuit de mise en série 97 dont la sortie délivre en 98 le train numérique binaire reconstitué $\hat{E}=\{\hat{b}_l\}$.

Le résultat de la multiplication dans 84 est conforme à la formule (4) mentionnée plus haut. Le filtre 91 permet de ne conserver que les composantes à basses fréquences. Les circuits 92, 93, 96 et 97 sont des circuits classiques dans le domaine technique des transmissions numériques.

**Revendications**

1. Modulateur pour transmission d'un train d'éléments binaires en double modulation d'amplitude à quatre niveaux sur porteuses en quadrature, caractérisé en ce qu'il comprend des moyens (22) pour déphaser, d'un demi-temps élémentaire, l'un par rapport à l'autre les trains numériques modulant les porteuses en quadrature.

2. Modulateur suivant la revendication 1, caractérisé en ce qu'il comprend des moyens (13) pour coder, suivant un codage par transition, l'un des trains numériques modulant les porteuses en quadrature.

3. Modulateur suivant la revendication 2, caractérisé en ce qu'il comprend un premier séparateur pair-impair (12) à l'entrée duquel est appliqué le train binaire à transmettre, une sortie dudit premier séparateur pair-impair étant reliée à l'entrée d'un circuit de codage par transition (13) dont la sortie ainsi que la seconde sortie dudit premier séparateur pair-impair (12) sont reliées aux entrées de deux seconds séparateurs pair-impair (14) dont les sorties sont respectivement reliées aux entrées de deux circuits de changement de signe un symbole sur deux (15, 16), dont les sorties sont respectivement reliées aux entrées de deux circuits de codage quaternaire à signal (17, 18), dont les sorties sont respectivement reliées aux entrées de signal modulant de deux multiplicateurs (19, 20), l'entrée de porteuse d'un multiplicateur (19) recevant un premier signal de porteuse à une fréquence donnée et l'entrée de porteuse de l'autre multiplicateur (20) recevant un second signal de porteuse à la même fréquence que le premier signal de porteuse, mais en quadrature par rapport à celle-là, les sorties desdits mulitiplicateurs (19, 20) étant respectivement reliées aux entrées d'un additionneur (21) dont la sortie délivre le signal modulé.

4. Démodulateur pour recevoir un signal transmis par un modulateur suivant l'une des revendications 2 et 3, caractérisé en ce qu'il comprend une entrée de signal modulé reliée, premièrement à l'entrée d'un circuit de récupération de porteuse (83), deuxièmement à l'entrée d'un circuit de récupération d'horloge (82) et, enfin, à une entrée d'un multiplicateur (84) dont l'autre entrée est reliée à la sortie dudit circuit de récupération de porteuse (83), la sortie dudit multiplicateur (84) étant reliée à l'entrée d'un filtre passe-bas (91) dont la sortie est reliée à l'entrée de signal d'un circuit échantillonneur (92) dont l'entrée d'horloge est reliée à la sortie dudit circuit de récupération d'horloge (82) et dont la sortie est reliée à l'entrée d'un circuit convertisseur analogique (93) à trois seuils dont une sortie est reliée à l'entrée d'un circuit de décodage par transition (96) dont la sortie ainsi que la seconde sortie dudit circuit convertisseur (93) sont reliées aux entrées correspondantes d'un circuit de mise en série (97) dont la sortie délivre le train binaire reçu.

**Claims**

1. A modulator for transmitting a bit train with an amplitude four-level modulation onto two frequency carriers in phase-quadrature, characterized in that it comprises means (22) for phase shifting by one/half of a bit period, one with respect to the other, the digital trains modulating the carriers in phase-quadrature.

2. A modulator according to claim 1, characterized in that it compises means (13) for encoding one of the digital trains modulating the carriers in phase-quadrature according to a transition encoding.

3. A modulator according to claim 2, characterized in that it comprises a first even-uneven separator (12) to the input of which the bit train to be transmitted is applied, one output of said first even-uneven separator being connected to the input of a transition encoding circuit (13), the output of which as well as the other output of said first even-uneven separator (12) are connected to the inputs of two second even-uneven separators (14), the outputs of which are respectively connected to the inputs of two circuits causing a change of sign every other symbol (15, 16), the outputs of which are respectively connected to the inputs of two signal quaternary encoding circuits (17, 18), the outputs of which are respectively connected to the modulation signal inputs of two multipliers (19, 20), the carrier input of one multiplier (19) receiving a first carrier signal at a given frequency and the carrier input of the other multiplier (20) receiving a second carrier signal at the same frequency as the first carrier signal, but in phase-quadrature therewith, the outputs of said multipliers (19, 20) being respectively connected to the inputs of an adder (21), the output of which delivers the modulated signal.

4. A demodulator for receiving a signal transmitted by a modulator according to either claims 2 or 3, characterized in that it comprises a modulated signal input that is first connected to the input of a carrier recovery circuit (83), second to the input of a clock recovery circuit (82), and finally to one input of a multiplier (84), the other input of which is connected from the output of said carrier recovery circuit (83), the output of said multiplier (84) being connected to the input of a low-pass filter (91), the output of which is connected to the signal input of a sample and hold circuit (92), the clock input of which is connected from the output of said clock recovery circuit (82) and the output of which is connected to the input of a three-threshold analog converter (93), one output of which is connected to the input of a transition decoding circuit (96), the output of which as well as the second output of said converter (93) are connected to the corresponding inputs of a seriating circuit (97), the output of which delivers the received bit train

## Ansprüche

1. Modulator zur Übertragung eines Zuges von Binärelemten mit einer vierpegeligen doppelten Amplitudenmodulation auf Quadrutur-Trägern, dadurch gekennzeichnet, daß dieser Mittel (22) enthält, um die digitalen Züge, die die Quadratur-Träger modulieren, um eine halbe Bit-Periode in der Phase gegeneinander zu verschieben.

2. Modulator nach Anspruch 1, dadurch gekennzeichnet, daß er Mittel (13) enthält, um einen der die Quadratur-Träger modulierenden digitalen Züge nach einem Übergangs-Code zu codieren.

3. Modulator nach Anspruch 2, dadurch gekennzeichnet, daß er einen ersten Gleich-Ungleich-Separator (12) enthält, dessen Eingang der zu übertragende Binärzug zugeführt wird, daß ein Ausgang des genannten ersten Gleich-Ungleich-Separators mit dem Eingang einer Schaltung (13) zur Übergangs-Codierung verbunden ist, deren Ausgang ebenso wie der andere Ansgang des genannten ersten Gleich-Ungleich-Separators (12) mit den Eingängen von zwei zweiten Gleich-Ungleich-Separatoren (14) verbunden ist, deren Ausgänge jeweils mit den Eingängen von zwei Schaltungen (15, 16) verbunden sind, die bei jedem zweiten Symbol einen Vorzeichenwechsel bewirken, deren Ausgänge jeweils mit den Eingängen von zwei Schaltungen (17, 18) zur quarternären Signal-Codierung verbunden sind, deren Ausgänge jeweils mit den Modulationssignal-Eingängen von zwei Multiplikations-Schaltungen (19, 20) verbunden sind, wobei der Trägereingang einer Multiplikations-Schaltung (19) ein erstes Trägersignal mit einer gegebenen Frequenz empfängt und der Trägereingang der anderen Multiplikations-Schaltung (20) ein zweites Trägersignal mit derselben Frequenz wie das erste Trägersignal, aber gegenüber dieser um 90° in der Phase verschoben empfängt, wobei die Ausgänge der Multiplikations-Schaltungen (19, 20) jeweils mit den Eingängen einer Addierschaltung (21) verbunden sind, deren Ausgang das modulierte Signal liefert.

4. Demodulator zum Empfang eines von einem Modulator gemäß Anspruch 2 oder 3 übertragenen Signals, dadurch gekennzeichnet, daß dieser einen modulierten Signaleingang enthält, der erstens mit dem Eingang einer Träger-Wiedergewinnungs-Schaltung (83), zweitens mit dem Eingang einer Takt-Wiedergewinnungs-Schaltung (82) und schließlich mit einem Eingang einer Multiplikations-Schaltung (84) verbunden ist, deren anderer Eingang mit dem Ausgang der genannten Träger-Wiedergewinnungs-Schaltung (83) verbunden ist, daß der Ausgang der genannten Multiplikations-Schaltung (84) mit dem Eingang eines Tiefpaßfilters (91) verbunden ist, dessen Ausgang mit den Signaleingang einer Auftast- und Halteschaltung (92) verbunden ist, deren Takteingang mit dem Ausgang der genannten Takt-Wiedergewinnungs-Schaltung (82) und deren Ausgang mit dem Eingang eines Drei-Schwellen-Analogumsetzers (93) verbunden ist, von dem ein Ausgang mit dem Eingang einer Übergangs-Codierungs-Schaltung (96) verbunden ist, deren Ausgang ebenso wie der zweite Ausgang des genannten Umsetzers (93) mit den entsprechenden Eingängen einer serienbildenden Schaltung (97) verbunden ist, deren Ausgang den empfangenen binären Zug liefert.

# FIG.1

# FIG.2

TRAIN BINAIRE A TRANSMETTRE $E = \{b_I\}$

$--/=$ — 12

TRAIN QUATERNAIRE $\{b_{2I-1}, b_{2I}\}$

CODAGE PAR TRANSITION — 13

$\{C_K\} = \{b'_{2I-1}, b_{2I}\}$

SÉPARATEURS PAIR-IMPAIR

$--/=$ — 14

$\{C_{2L-1}\}$ — 14.1     14.2 — $\{C_{2L}\}$

CHANGEMENT DE SIGNE 1 SYMBOLE SUR 2     $(-1)^K$   $(-1)^K$

$\{(-1)^L C_{2L-1}\}$     $\{(-1)^L C_{2L}\}$

CODAGE QUATERNAIRE À SIGNAL     $g(t)$   $g(t)$

TRAIN A     TRAIN B

$\cos(2\pi f_0 t + \varphi_0)$     $-\sin(2\pi f_0 t + \varphi_0)$

SIGNAL 2MA4Q

$$x(t) = \pm \sum a_k g(t - 2KT) \cos\left(2\pi f_0 t + K\frac{\pi}{2} + \varphi_0\right)$$

# FIG.3

E o—[11]—[24] ── 25 ── [28 CODEUR PAR TRANSITION] ── [29 INVERSION 2 BITS SUR 4] ── [30 --/=] ── 31 ──o A

H o— 10MHz ── SÉPARATEUR

100 — :2

H/2

RETARD 2T ── 33 ──o C

RETARD 2T ── 37 ──o D

# FIG.5

FIG.4

0 031 762

# FIG.6

| a | 6 | 7 | 8 | 9 | 10 | 11 | 12 | 13 | 14 | 15 | 16 | 17 | 18 | 19 | 20 | 21 | N° |

b — $H$

c — $h_1$

d — $h_2$

e — $\bar{h}_2$

f — $h_4$

g — $\bar{h}_4$

h — $h_8$

| | | | | | | | | | | | | | | | | | | | |
|---|---|---|---|---|---|---|---|---|---|---|---|---|---|---|---|---|---|---|---|
| i | 5 | 6 | 7 | 8 | 9 | 10 | 11 | 12 | 13 | 14 | 15 | 16 | 17 | 18 | 19 | 20 | 21 | | $a$ |
| j | | 5 | | 7 | | 9 | | 11 | | 13 | | 15 | | 17 | | 19 | | | $b$ |
| k | 3 | | 5 | | 7 | | 9 | | 11 | | 13 | | 15 | | 17 | | 19 | | $c$ |
| l | 4 | | 6 | | 8 | | 10 | | 12 | | 14 | | 16 | | 18 | | 20 | | $d$ |
| m | 3' | | 5' | | 7' | | 9' | | 11' | | 13' | | 15' | | 17' | | 19' | | $e$ |
| n | 1' | | 3' | | 5' | | 7' | | 9' | | 11' | | 13' | | 15' | | 17' | | $f$ |
| o | 2 | | 4 | | 6 | | 8 | | 10 | | 12 | | 14 | | 16 | | 18 | | $g$ |
| p | 1' | | 3' | | $\bar{5'}$ | | $\bar{7'}$ | | 9' | | 11' | | $\bar{13'}$ | | $\bar{15'}$ | | 17' | | $i$ |
| q | | | 1' | | | | $\bar{5'}$ | | | | 9' | | | | $\bar{13'}$ | | | | $A$ |
| r | | | 2 | | | | 6 | | | | 10 | | | | 14 | | | | $B$ |
| s | | | | 3' | | | | $\bar{7'}$ | | | | 11' | | | | $\bar{15'}$ | | | $C$ |
| t | | | | 4 | | | | 8 | | | | 12 | | | | 16 | | | $D$ |

4

# FIG.7